# DEMANDE DE BREVET EUROPEEN

(11) **EP 1 233 623 A1**
(43) Date de publication de la demande: **21.08.2002**
(21) Numéro de dépôt: 02075563.3
(22) Date de dépôt: 11.02.2002
(51) Int. Cl.: H04N 7/24

(54) **Trames de commandes et procédé de concaténation de trame de commandes**

(30) Priorité: 16.02.2001 FR 0102135
(71) Demandeur: Koninklijke Philips Electronics N.V., 5621 BA Eindhoven (NL)
(72) Inventeur: Duquesnois, Laurent, 75008 Paris (FR)
(74) Mandataire: de la Fouchardière, Marie-Noelle

(57) **Abrégé**

Une trame de commandes selon l'invention comporte au moins une dernière commande ayant un bit de suite, et un nombre de bits de remplissage tel que la trame occupe un nombre entier de mots. Elle est prévue pour permettre de déterminer l'emplacement du bit de suite de ladite dernière commande. Un procédé selon l'invention de concaténation d'une première et d'une seconde trames de commandes comporte les étapes suivantes :
a) détermination de l'emplacement du bit de suite de la dernière commande de la première trame,
b) modification du bit de suite de la dernière commande de la première trame,
c) suppression des bits non significatifs de la première trame,
d) insertion d'au moins une commande de la seconde trame à la suite du bit de suite modifié,
e) ajout d'un nombre de bits de remplissage pour former une nouvelle trame qui occupe un nombre entier de mots.

## Description

### Domaine de l'invention

L'invention concerne un procédé de concaténation d'une première et d'une seconde trames contenant chacune une ou plusieurs commandes, dont une dernière commande qui contient un bit de suite positionné de façon à indiquer si une autre commande est ou non à suivre dans la trame.

Elle concerne aussi un équipement électronique doté de moyens de mise en oeuvre d'un tel procédé de concaténation, et un système de transmission comportant un tel équipement électronique. Elle concerne aussi un programme d'ordinateur comportant des moyens de mise en oeuvre d'un tel procédé de concaténation de commandes.

L'invention concerne également une trame de commande comportant au moins une dernière commande ayant un bit de suite, et un nombre de bits de remplissage tel que la trame occupe un nombre entier de mots. Elle concerne aussi un équipement électronique doté de moyens de transmission d'une telle trame de commande.

L'invention concerne enfin un procédé de constitution d'un point d'accès à un flux de données qui utilise un tel procédé de concaténation.

L'invention s'applique notamment dans le domaine de la description de scène multimédia. Elle est applicable par exemple dans des outils d'édition de contenu.

### Arrière plan technologique de l'invention

La norme MPEG4 est notamment décrite dans le document ISO/IEC 14496-1 intitulé « Information Technology - Coding of audio-visual objects - part 1 : systems » publié par l'ISO en 1999.

Cette norme décrit des moyens de codage individuel d'objets audio, visuels ou audiovisuels, et des moyens pour composer des scènes multimédia à partir de tels objets. Les informations nécessaires à la composition d'une scène constituent la description de la scène.

Ce concept de description de scène est exposé au paragraphe 9 de la norme MPEG-4. En résumé, dans la norme MPEG-4, les descriptions de scène ont une structure arborescente. Chaque noeud de la structure correspond à un objet et contient un ensemble de paramètres, notamment des paramètres de placement de l'objet dans le temps et dans l'espace. Une telle structure arborescente n'est pas statique : les paramètres des noeuds peuvent être modifiés, des noeuds peuvent être ajoutés, remplacés, supprimés.

La norme MPEG-4 définit deux types de commandes relatives aux descriptions de scènes: d'une part une commande de remplacement de scène qui contient une description de scène entière, et d'autre part des commandes de modification de scène qui contiennent des modifications à apporter à une description de scène. Ces commandes de remplacement et de modification de scène font partie d'un flux de données couramment appelé flux BIFS (de l'anglais Binary Format for Scene description). Elles sont appelées commandes BIFS dans la suite de la description.

La syntaxe des commandes BIFS est décrite au chapitre 9.3.6 de la norme MPEG-4. En particulier, d'après le paragraphe 9.3.6.2, une commande BIFS est transmise dans une trame de commande, chaque trame de commande pouvant comporter une ou plusieurs commandes BIFS. Dans une trame de commande, chaque commande BIFS se termine par un bit de suite dont la fonction est d'indiquer au décodeur si une autre commande BIFS est à suivre dans la même trame de commande.

### Résumé de l'invention

L'invention a pour but de proposer un procédé de concaténation de trames de commandes, applicable notamment aux trames de commandes BIFS.

Un procédé de concaténation selon l'invention :
- est applicable à une première et à une seconde trames contenant chacune une ou plusieurs commandes, dont une dernière commande, les commandes d'une trame comportant un bit de suite positionné de façon à indiquer si une autre commande est ou non à suivre dans la trame, lesdites trames comportant un nombre de bits non significatifs dont un nombre de bits de remplissage tel qu'elles occupent un nombre entier de mots, et ladite première trame au moins étant prévue pour permettre de déterminer l'emplacement du bit de suite de sa dernière commande,
- et comporte les étapes suivantes :
   a) détermination de l'emplacement du bit de suite de la dernière commande de la première trame,
   b) modification du bit de suite de la dernière commande de la première trame,
   c) suppression des bits non significatifs de la première trame,
   d) insertion d'au moins une commande de la seconde trame à la suite du bit de suite modifié,
   e) ajout d'un nombre de bits de remplissage pour former une nouvelle trame qui occupe un nombre entier de mots.

Dans un premier mode de réalisation, lesdits bits non significatifs comportent un mot supplémentaire placé à la suite des bits de remplissage, eux-mêmes placés à la suite du bit de suite de la dernière commande de la trame, et le mot supplémentaire indique le nombre de bits de remplissage.

Dans ce premier mode de réalisation, l'invention consiste donc à ajouter aux trames de commandes un mot supplémentaire qui permet de déterminer la position du bit de suite de la dernière commande. Il est alors possible de retrouver ce bit de suite dans la trame de commande, et d'en modifier la valeur de façon à ajouter une ou plusieurs autres commandes à la suite de ce bit de suite.

Dans un second mode de réalisation, lesdits bits de remplissage sont positionnés à une valeur inverse de celle dudit bit de suite de façon à permettre la détermination de l'emplacement dudit bit de suite. Ce mode de réalisation permet de faire l'économie du mot supplémentaire utilisé dans le premier mode de réalisation.

L'invention a également pour but de proposer un format de trame de commande permettant la mise en oeuvre d'un procédé de concaténation selon l'invention.

Dans un premier mode de réalisation, une trame de commande selon l'invention comporte au moins une dernière commande ayant un bit de suite, un nombre de bits de remplissage tel que la trame occupe un nombre entier de mots, et un mot supplémentaire placé à la suite des bits de remplissage, eux-mêmes placés à la suite du bit de suite, ledit mot supplémentaire indiquant ledit nombre de bits de remplissage.

Dans un second mode de réalisation, une trame de commande selon l'invention comporte au moins une dernière commande ayant un bit de suite, et un nombre de bits de remplissage tel que la trame occupe un nombre entier de mots, lesdits bits de remplissage étant positionnés à une valeur inverse de celle dudit bit de suite.

L'invention a également pour but de proposer une application avantageuse d'un procédé de concaténation tel que décrit plus haut.

La norme MPEG-4 permet à un serveur d'envoyer des descriptions de scènes à un ou plusieurs clients, et de transmettre ensuite des mises à jour des descriptions de scènes déjà envoyées. Les commandes de remplacement constituent alors des points d'accès au flux, c'est-à-dire des points par lesquels un client peut se brancher sur le flux.

L'invention propose un procédé de constitution d'un point d'accès à un flux de données, applicable notamment à un flux BIFS, qui comporte une étape de stockage de trames de commande relative à une description de scène, une étape de stockage d'au moins une trame de commande relative à au moins une modification de scène, et une étape de mise en oeuvre d'un procédé de concaténation tel que décrit plus haut, pour concaténer ladite trame de commande relative à une description de scène avec ladite trame de commande relative à au moins une modification de scène, ledit point d'accès étant constitué à partir du résultat de ladite concaténation.

Un tel procédé de constitution d'un point d'accès, qui comporte une étape de stockage des trames de remplacement de scène lorsqu'elles sont encodées, pour les réutiliser ensuite afin de former un point d'accès au flux, permet d'éviter d'avoir à ré-encoder une description de scène à chaque fois que l'on veut insérer un point d'accès. Un procédé de constitution de point d'accès selon l'invention présente l'avantage supplémentaire de permettre d'afficher directement une scène dans laquelle une modification est prise en compte. Lorsque, contrairement à l'invention, la commande de remplacement de scène et la commande de modification de scène sont transmises dans deux trames de commandes distinctes, le décodeur affiche en effet successivement la scène sans la modification, puis la scène avec la modification.

### Brève description des dessins

L'invention sera mieux comprise et d'autres détails apparaîtront dans la description qui va suivre en regard des dessins annexés donnés à titre d'exemples non limitatifs et dans lesquels :
- la figure 1 représente un exemple de trame de commande BIFS selon la norme MPEG-4,
- la figure 2 représente un exemple de trame de commande BIFS conformément à un premier mode de réalisation de l'invention,
- la figure 3 représente un exemple de trame de commande BIFS conformément à un second mode de réalisation de l'invention,
- la figure 4 est un schéma résumant le fonctionnement d'un procédé de concaténation de trames de commandes selon l'invention,
- la figure 5 est un schéma d'un exemple de système de transmission selon l'invention, qui met en oeuvre un procédé de constitution de points d'accès selon l'invention.

### Description d'un mode de réalisation préférentiel

L'invention va maintenant être décrite dans le cadre de la norme MPEG-4. Ceci n'est pas limitatif. Un procédé de concaténation de trames de commandes selon l'invention est applicable à tout type de trames ayant une structure du même type.

Dans la suite de la description, les trames sont découpées de façon classique en mots de 8 bits, couramment appelés octets.

Conformément à la norme MPEG-4, une trame de commandes comporte une ou plusieurs commandes dont une dernière commande. Et chaque commande contient un bit de suite dont la fonction est d'indiquer si la commande est ou non suivie d'une autre commande dans la même trame. Lorsque le bit de suite d'une trame est VRAI, cette commande est suivie par une autre commande dans la trame de commandes. En revanche, lorsqu'il est FAUX, aucune autre commande ne suit, et le décodeur ignore le reste de la trame. Seule la dernière commande d'une trame a un bit de suite positionné à la valeur FAUX. Une trame peut ne contenir qu'une seule commande. Dans ce cas, cette unique commande constitue la dernière commande de la trame.

Les trames de commandes BIFS telles que définies dans la norme MPEG-4 ont un nombre de bits quelconque. En particulier ce nombre de bits n'est pas nécessairement un multiple de 8. Dans la pratique, lorsqu'une trame ne comporte pas un multiple de 8 bits, il est nécessaire de la compléter par des bits de remplissage jusqu'à obtenir un nombre entier de mots de 8 bits. Ces bits de remplissage qui sont placés à la suite du bit de suite de la dernière commande de la trame ne sont pas significatifs. Ils sont ignorés par le décodeur. Le dernier bit significatif d'une trame de commandes est donc constitué par le bit de suite de sa dernière commande.

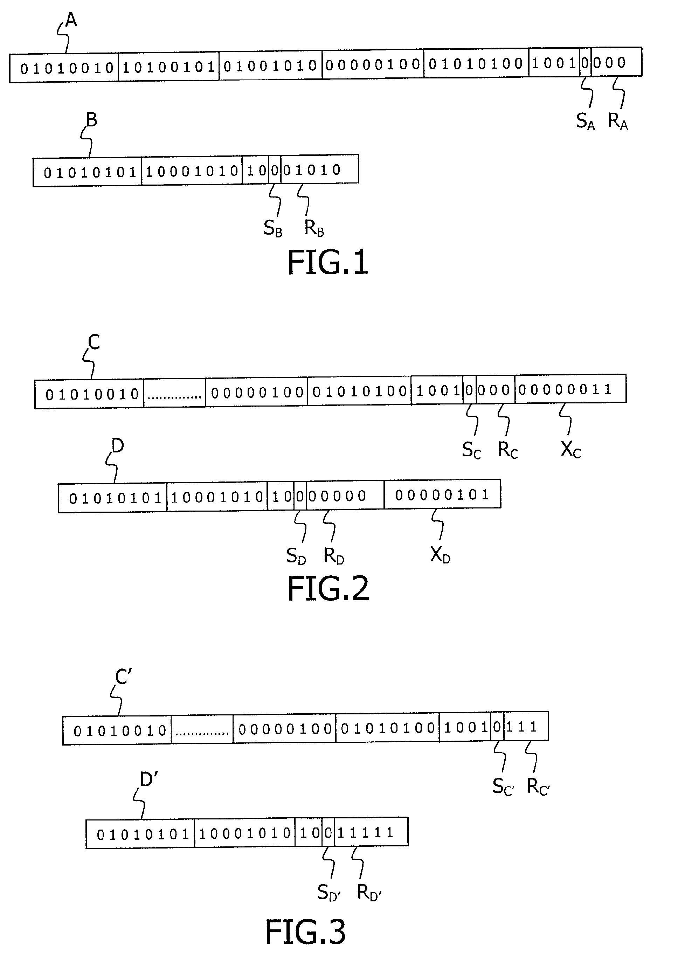

Sur la figure 1, on a représenté une première trame de commande A qui comporte 6 mots de 8 bits. Les 3 derniers bits sont des bits de remplissage. Ils portent la référence R_{A}. Le bit qui précède ces 3 bits de remplissage est le bit de suite de la dernière commande de la trame A. Il porte la référence S_{A}. Une seconde trame de commandes B comporte 3 mots de 8 bits. Les cinq derniers bits sont des bits de remplissage. Ils portent la référence R_{B}. Le bit qui précède ces 5 bits de remplissage est le bit de suite de la dernière commande de la trame B. Il porte la référence S_{B}.

D'une façon générale, une trame de commande comporte un nombre de bits de remplissage compris entre 0 et 7. Ces bits de remplissage peuvent avoir une valeur quelconque. Sur la figure 1, on leur a attribué à titre d'exemple la valeur « 0 ».

Sur la figure 2, on a représenté à titre d'exemple deux trames de commandes C et D correspondant à un premier mode de réalisation de l'invention. La trame de commande C contient tous les mots de la trame de commande A, mais elle comporte en plus un mot supplémentaire référencé X_{C}. La trame de commande D contient tous les mots de la trame de commande B, mais elle comporte en plus un mot supplémentaire référencé X_{D}. Ces mots supplémentaires indiquent le nombre de bits de remplissage contenus dans les trames de commandes C et D respectivement. De même que la trame de commandes A, la trame de commande C contient N_{C}=3 bits de remplissage. Le mot supplémentaire X_{C} correspond donc au codage de la valeur 3 sur 8 bits, soit « 00000011 ». De même que la trame de commande B, la trame de commandes D contient N_{D}=5 bits de remplissage. Le mot supplémentaire X_{D} correspond donc au codage de la valeur 5 sur 8 bits, soit « 00000101 ». D'une façon générale, dans ce premier mode de réalisation, le nombre de bits non significatifs est égal au nombre de bits de remplissage, plus huit. Il est donc compris entre 8 et 15.

Sur la figure 3, on a représenté à titre d'exemple deux trames de commandes C' et D' correspondant à un second mode de réalisation de l'invention. Les trames de commande C' et D' contiennent tous les mots des trames de commande A et B respectivement, mais les bits de remplissage R_{C'} et R_{D'} ne sont plus quelconques : ils sont positionnés à une valeur inverse de celle des bits de suite S_{C'} et S_{D',} c'est-à-dire à 1. D'une façon générale, dans ce second mode de réalisation, le nombre de bits non significatifs est égal au nombre de bits de remplissage. Il est donc compris entre 0 et 7.

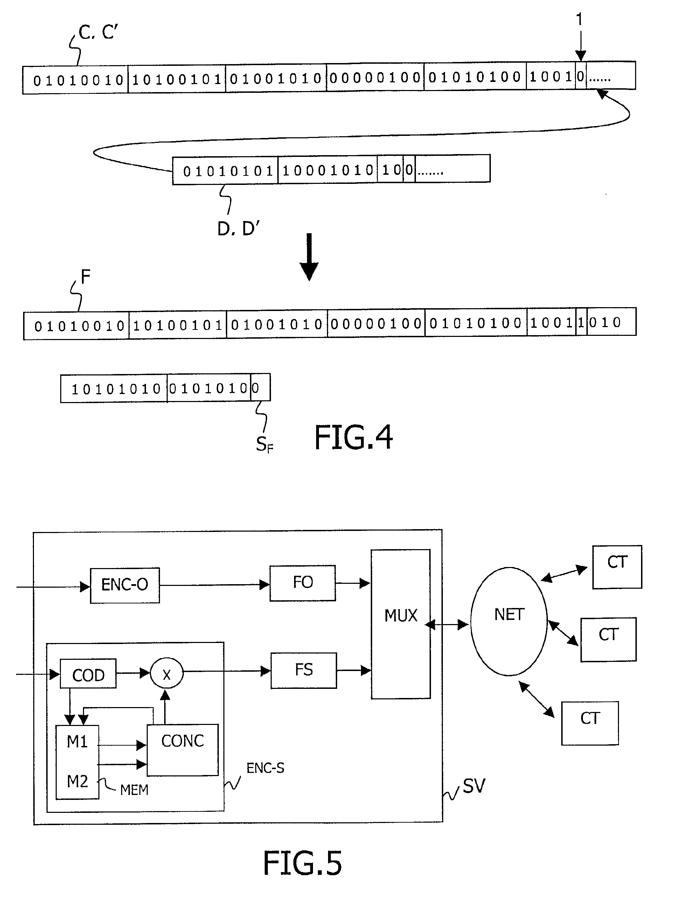

Sur la figure 4, on a représenté un schéma qui explique le fonctionnement d'un procédé de concaténation selon l'invention dans le cas où l'on cherche à concaténer les trames de commandes C et D représentées à la figure 2 (ou les trames C' et D'représentées à la figure 3) afin de former une nouvelle trame F.
- L'étape a) consiste à déterminer l'emplacement du bit de suite S_{C} de la dernière commande de la trame de commandes C ou C'.
   Dans le premier mode de réalisation de l'invention, l'emplacement du bit de suite S_{C} est déterminé en lisant la valeur N_{C} indiquée par le mot supplémentaire X_{C} de la trame de commande C.
   Dans le second mode de réalisation de l'invention, l'emplacement du bit de suite S_{C}, est déterminé en lisant la trame C' à partir de la fin. Par construction, le bit de suite est constitué par le premier bit qui est positionné à « 0 », en partant de la fin de la trame.
- L'étape b) consiste à positionner le bit de suite S_{C} ou S_{C'} à la valeur VRAI (c'est-à-dire au niveau logique « 1 » dans ce mode de réalisation), de façon à indiquer que, dans la nouvelle trame F, la dernière commande de la trame C ou C' sera suivie par une autre commande.
- L'étape c) consiste à supprimer les bits non significatifs de la trame de commande C ou C'. Dans le premier mode de réalisation de l'invention, ces bits non significatifs sont constitués par les bits de remplissage R_{C} et le mot supplémentaire X_{C}. Dans le second mode de réalisation de l'invention, ils sont constitués par les bits de remplissage R_{C'}.
- L'étape d) consiste à insérer les bits significatifs de la trame de commande D à la suite du bit de suite S_{C} ou S_{C'} (les bits de remplissage et le mot supplémentaire éventuel de la commande D ne sont pas pris en compte).
- L'étape e) consiste à compléter la nouvelle trame de commande F ainsi obtenue, avec des bits de remplissage R_{F}, de sorte qu'elle occupe un nombre entier de mots.

Dans le premier mode de réalisation de l'invention, une étape supplémentaire peut être prévue pour ajouter à la suite des bits de remplissage R_{F} un mot supplémentaire X_{F} indiquant le nombre de bits de remplissage de la nouvelle trame de commandes F. Ce mode de réalisation est utilisé lorsque la trame F est susceptible de faire l'objet d'une nouvelle concaténation. En revanche si la trame F est directement transmise au décodeur, cette étape supplémentaire n'est pas mise en oeuvre.

Dans les exemples qui viennent d'être décrits, la seconde trame de commandes est aussi prévue pour permettre de déterminer l'emplacement du bit de suite de sa dernière commande. Cela permet de déterminer les bits non significatifs de la seconde trame, afin de ne pas les prendre en compte lors de la concaténation. Dans les cas où la somme des nombres de bits de remplissage N_{C} et N_{D} (ou N_{C}, et N_{D},) des première et seconde trames est supérieur à 8, ce la permet de faire l'économie d'un mot dans la nouvelle trame obtenue. Cette mesure, bien que non essentielle, et donc avantageuse.

Sur la figure 5, on a représenté un exemple de système de transmission selon l'invention qui comporte un serveur SV et une pluralité de clients CT. Le serveur SV reçoit un flux SO d'objets audio/vidéo et un flux SS de description de scènes. Il comporte un encodeur d'objets audio/vidéo ENC-O pour encoder le flux d'objets audio/vidéo SO et un encodeur de descriptions de scènes ENC-S pour encoder le flux de description de scènes SS. L'encodeur d'objets audio/vidéo ENC-O délivre des données codées AVO qui sont transmises à un premier dispositif de formatage FO. L'encodeur de descriptions de scènes ENC-S délivre des trames de commandes BIFS qui sont transmises à un second dispositif de formatage FS. Le dispositif de formatage FS délivre des unités de données AU. Finalement, un multiplexeur MUX permet de multiplexer les données formatées AVO et AU issues des deux dispositifs de formatage FO et FS. Les données multiplexées sont transmises par l'intermédiaire du média de transmission NET aux clients CT.

Conformément à l'invention, l'encodeur de description de scène ENC-S comporte un bloc de codage proprement dit COD, une mémoire MEM qui permet de stocker des données, un bloc de concaténation CONC, et un bloc de commutation X pour relier l'entrée du second dispositif de formatage FS, soit avec la sortie du bloc de codage COD, soit avec la sortie du bloc de concaténation CONC. La sortie du bloc de concaténation CONC est avantageusement reliée à la mémoire MEM. Un premier emplacement M1 de la mémoire MEM est prévu pour stocker des trames de remplacement de scène. Un second emplacement M2 de la mémoire MEM est prévu pour stocker des trames de modification de scène. Les points d'accès au flux BIFS sont formés en concaténant des trames de commandes qui sont stockées dans lesdits premier et second emplacements M1 et M2 de la mémoire MEM. Pour cela, le dispositif de concaténation CONC lit une trame de commande de remplacement de scène REP dans l'emplacement mémoire M1 et une trame de modification de scène MOD dans l'emplacement mémoire M2. Puis, conformément à l'invention, il ajoute la ou les commandes de la trame MOD à la suite de la dernière commande de la trame RAP. Le résultat de cette concaténation forme un point d'accès AP. De façon optionnelle, le point d'accès AP est ensuite stocké dans le premier emplacement mémoire M1 de façon à pouvoir faire lui-même l'objet d'une concaténation avec une autre trame de modification de scène MOD' préalablement stockée dans le second emplacement mémoire M2.

## Revendications

1. Procédé de concaténation d'une première (C, C') et d'une seconde (D, D') trames contenant chacune une ou plusieurs commandes, dont une dernière commande, les commandes d'une trame comportant un bit de suite (S_{C}, S_{C'}, S_{D}, S_{D'}) positionné de façon à indiquer si une autre commande est ou non à suivre dans la trame, lesdites trames comportant un nombre de bits non significatifs, dont un nombre de bits de remplissage (R_{C}, R_{C'}) tel qu'elles occupent un nombre entier de mots, et ladite première trame au moins étant prévue pour permettre de déterminer l'emplacement du bit de suite de sa dernière commande,
ledit procédé de concaténation comportant les étapes suivantes:
a) détermination de l'emplacement du bit de suite de la dernière commande de la première trame,
b) modification du bit de suite de la dernière commande de la première trame,
c) suppression des bits non significatifs de la première trame,
d) insertion d'au moins une commande de la seconde trame à la suite du bit de suite modifié,
e) ajout d'un nombre de bits de remplissage pour former une nouvelle trame qui occupe un nombre entier de mots.

2. Procédé de concaténation de trames selon la revendication 1, **caractérisé en ce que** lesdits bits non significatifs comportent un mot supplémentaire (X_{C}) placé à la suite des bits de remplissage, eux-mêmes placés à la suite du bit de suite de la dernière commande de la trame, et **en ce que** le mot supplémentaire indique le nombre de bits de remplissage (N_{C}).

3. Procédé de concaténation de trames selon la revendication 1, **caractérisé en ce que** lesdits bits de remplissage sont positionnés à une valeur inverse (« 1 ») de celle (« 0 ») dudit bit de suite (S_{C'}) de façon à permettre la détermination de l'emplacement dudit bit de suite.

4. Trame de commande(s) (C, C', D, D') comportant au moins une dernière commande ayant un bit de suite (S_{C}, S_{D}), et un nombre de bits de remplissage (R_{C}, R_{D}) tel que la trame occupe un nombre entier de mots, **caractérisé en ce qu'**elle comporte un mot supplémentaire (X_{C}, X_{D}) placé à la suite des bits de remplissage, eux-mêmes placés à la suite du bit de suite, et **en ce que** le mot supplémentaire indique le nombre (N_{C}, N_{D}) de bits de remplissage.

5. Trame de commande(s) comportant au moins une dernière commande ayant un bit de suite (S_{C'}, S_{D'}), et un nombre de bits de remplissage (R_{C'}, R_{D'}) tel que la trame occupe un nombre entier de mots, **caractérisée en ce que** lesdits bits de remplissage sont positionnés à une valeur inverse de celle dudit bit de suite.

6. Trame de commande(s) selon l'une des revendications 4 ou 5, **caractérisée en ce qu'**il s'agit d'une trame de commande BIFS telle que décrite dans la recommandation ISO/IEC 14496-1.

7. Equipement électronique comportant des moyens (CONC) de mise en oeuvre d'un procédé de concaténation de trames de commandes selon la revendication 1.

8. Equipement électronique comportant des moyens de transmission d'une trame de commande selon l'une des revendications 4 ou 5.

9. Procédé de constitution d'un point d'accès à un flux de données comportant une étape de stockage de trames de commande relative à une description de scène (M1) et une étape de stockage d'au moins une trame de commande relative à au moins une modification de scène (M2), **caractérisé en ce qu'**il comporte une étape (CONC) de mise en oeuvre d'un procédé de concaténation selon la revendication 1, pour concaténer ladite trame de commande relative à une description de scène avec ladite trame de commande relative à au moins une modification de scène, ledit point d'accès étant constitué à partir du résultat de ladite concaténation.

10. Système de transmission comportant au moins un serveur (SV) et au moins un client (CT), ledit serveur étant destiné à envoyer audit clients des données et des trames de commandes relatives aux dites données, ledit serveur comportant des moyens de mise en oeuvre d'un procédé de concaténation de trames de commandes selon la revendication 1.

11. Produit programme d'ordinateur comportant des moyens de mise en oeuvre d'un procédé de concaténation de trames de commande selon la revendication 1.
